# EUROPEAN PATENT APPLICATION

(11) **EP 4 759 652 A1**
(43) Date of publication of application: **17.06.2026**
(21) Application number: 25220690.9
(22) Date of filing: 04.12.2025
(51) Int. Cl.: B60T 13/66, B60T 17/22

(54) **BRAKE SYSTEM AND METHOD OF CONTROL**

(30) Priority: 10.12.2024 US 202418974992
(71) Applicant: ArvinMeritor Technology, LLC, Troy, MI 48084 (US)
(72) Inventor: Philpott, Daniel, Troy, 48084 (US); Ugo, Mark, Troy, 48084 (US)
(74) Representative: Whitfield, Jack Stephen

(57) **Abstract**

A brake system and method of control. A brake pad assembly is actuatable from a retracted position to an extended position with a fluid. The method includes determining whether a running clearance is acceptable based on a first fluid supply pressure associated with the brake pad assembly being in a retracted position and a second fluid supply pressure associated with the brake pad assembly being in an extended position.

## Description

### TECHNICAL FIELD

The invention relates to a friction brake system for a vehicle and a method of control.

### BACKGROUND

A brake assembly and method of calculating a running clearance of a disc brake is disclosed in U.S. patent publication number 2024/0019008. This application claims priority to US Patent Application No. 18/974992 filed at the USPTO on 10 December 2024 entitled Brake System and method of control.

### SUMMARY

The invention relates to controlling a friction brake of a vehicle. The method includes determining a first supply pressure of a fluid of a fluid power system when a brake pad assembly is in a retracted position, actuating the brake pad assembly from the retracted position to an extended position with the fluid, determining a second supply pressure of the fluid when the brake pad assembly is in the extended position, and determining whether the running clearance is acceptable based on the first supply pressure and the second supply pressure.

The method may include determining whether the vehicle is stationary before determining the first supply pressure. Actuating the brake pad assembly from the retracted position to the extended position may occur when the vehicle is stationary. The method may include not actuating the brake pad assembly from the retracted position to the extended position when the vehicle is not stationary.

The method may include increasing pressure of the fluid when the first supply pressure does not exceed a lower threshold. Pressure of the fluid may be increased before actuating the brake pad assembly from the retracted position to the extended position. Increasing pressure of the fluid may comprise operating a pump of the fluid power system to increase pressure of the fluid. The pump may increase pressure of the fluid in a storage tank of the fluid power system.

The method may include decreasing pressure of the fluid when the first supply pressure exceeds an upper threshold. Pressure of the fluid may be decreased before actuating the brake pad assembly from the retracted position to the extended position.

The method may include temporarily disabling the pump of the fluid power system. The pump may be temporarily disabled before actuating the brake pad assembly from the retracted position to the extended position.

The friction brake may be a member of a set of friction brakes. Providing the running clearance notification may further comprise identifying the member of the set of friction brakes for which a running clearance between the brake pad assembly and a friction member is greater than expected.

The method may include conducting a leak check. The leak check may be conducted before determining whether the running clearance is acceptable.

The method may include determining a third supply pressure of the fluid. The third supply pressure of the fluid may be determined after determining the second supply pressure of the fluid. The method may include providing a leak notification. The leak notification may be provided when the difference between the first supply pressure and the third supply pressure exceeds a predetermined value, such as a second predetermined value. Determining the third supply pressure may occur when the brake pad assembly is in the retracted position. Determining the third supply pressure when the brake pad assembly is in the retracted position may be associated with conducting a leak check prior to subsequent brake application. Determining the third supply pressure may occur when the brake pad assembly is in the extended position. Determining the third supply pressure may occur a predetermined amount of time after actuating the brake pad assembly to the extended position.

The method may include actuating the brake pad assembly from the extended position to the retracted position after determining the third supply pressure.

The method may include providing a running clearance notification. The running clearance notification may be provided when a difference between the first supply pressure and the second supply pressure exceeds a first predetermined value.

The invention relates to a brake system. The brake system comprises a friction brake, a fluid power system, and a controller. The friction brake comprises a brake pad assembly and a brake actuator. The brake pad assembly is moveable between a retracted position and an extended position. The brake actuator is configured to actuate the brake pad assembly. The fluid power system is fluidly connectable to the brake actuator. The fluid power system comprises a storage tank, a pressure sensor, and a control valve. The storage tank receives pressurized fluid. The pressure sensor measures pressure of the pressurized fluid. The control valve is fluidly connected to the storage tank. The control valve provides pressurized fluid to the brake actuator when in an open position. The controller is configured to receive a signal from the pressure sensor that is indicative of a first supply pressure of the pressurized fluid when the brake pad assembly is in the retracted position. The controller is configured to open the control valve, thereby actuating the brake pad assembly from the retracted position to the extended position. The controller is configured to receive the signal from the pressure sensor that is indicative of a second supply pressure of the pressurized fluid when the brake pad assembly is in the extended position. The controller is configured to provide a running clearance notification based on the first supply pressure and the second supply pressure.

The fluid power system may further comprise a pump. The pump may be configured to provide pressurized fluid to the storage tank. The controller may temporarily disable the pump before the control valve is opened. The controller may temporarily disable the pump when the control valve is open.

The fluid power system may further comprise a vent valve. The vent valve may be fluidly connected to the storage tank. The controller may open the vent valve to release pressurized fluid from the fluid power system. The controller may open the vent valve before opening the control valve when the fluid supply pressure exceeds an upper threshold. The friction brake may be a member of a set of friction brakes. The control valve may be a member of a set of control valves. Each member of the set of control valves may be fluidly connected to a different member of the set of friction brakes.

The invention also relates to a method of controlling a friction brake of a vehicle. The method includes increasing a pressure of a fluid in a storage tank of a fluid power system when a first supply pressure does not exceed a lower threshold, decreasing the pressure of the fluid in the storage tank when the first supply pressure exceeds an upper threshold, maintaining the pressure of the fluid in the storage tank such that the pressure of fluid in the storage tank is not increased, determining the pressure of the fluid in the storage tank after maintaining the pressure, and conducting a leak check of the fluid power system. Conducting the leak check includes providing the fluid from the storage tank to the friction brake, determining the pressure of the fluid in the storage tank after providing the fluid to the friction brake, and comparing the pressure of the fluid in the storage tank after maintaining the pressure to the pressure of the fluid in the storage tank after providing fluid to the friction brake.

The invention also relates to a brake control arrangement. The brake control arrangement comprises a controller. The controller is configured to receive an input signal from a pressure sensor, the input signal being indicative of a first supply pressure of a pressurized fluid when a brake pad assembly is in a retracted position, provide an output signal configured to open a control valve to provide the pressurized fluid to a brake actuator to actuate the brake pad assembly from the retracted position to the extended position, receive a second input signal from the pressure sensor, the second input signal being indicative of a second supply pressure of the pressurized fluid when the brake pad assembly is in the extended position, and output a running clearance notification based on the first supply pressure and the second supply pressure.

### BRIEF DESCRIPTION OF THE DRAWINGS

Figure 1 illustrates an example of a vehicle comprising a brake system.
Figures 2 and 3 illustrate a portion of an example of a friction brake of the brake system with brake pad assembles in examples of retracted and extended positions, respectively.
Figures 4 and 5 show flowcharts of a method of controlling the brake system.
Figure 6 is a plot associated with supply pressure decreasing due to successive brake application and release cycles.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

It will also be understood that, although the terms first, second, etc. are, in some instances, used herein to describe various elements, these elements should not be limited by these terms. These terms are only used to distinguish one element from another. For example, a first element could be termed a second element, and similarly a second element could be termed a first element without departing from the scope of the various described embodiments. The first element and the second element are both elements, but they are not the same element.

The terminology used in the description of the various described embodiments is for the purpose of describing particular embodiments only and is not intended to be limiting. As used in the description of the various described embodiments and the appended claims, the singular forms "a" and "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

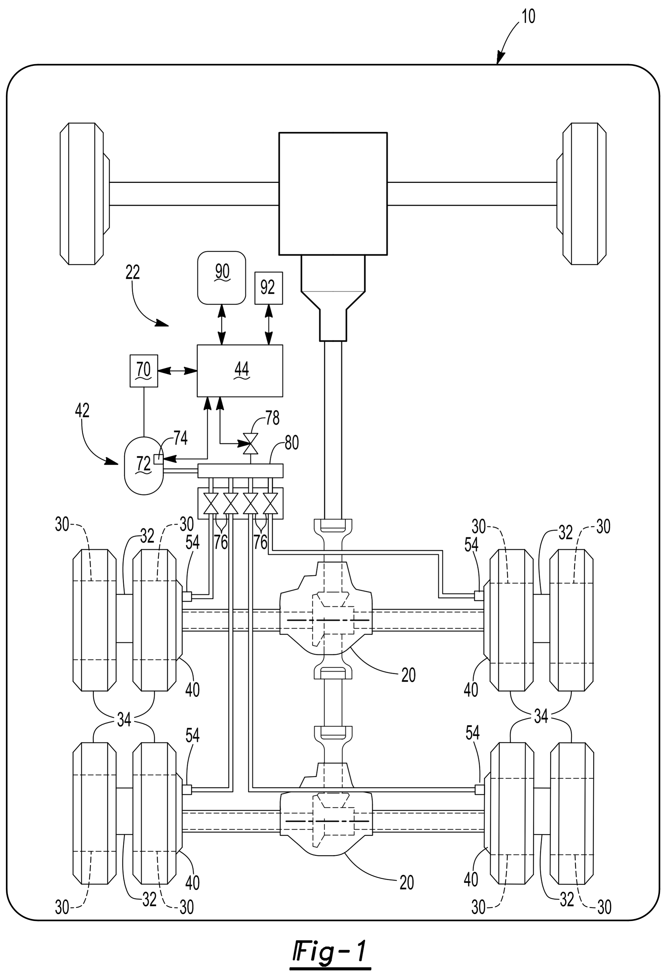

Referring to Figure 1, a schematic example of a vehicle 10 is shown. The vehicle 10 may be of any suitable type, such as a truck, bus, farm equipment, mining equipment, military transport or weaponry vehicle, cargo loading equipment for land, air, or marine vessels, a trailer for transporting cargo or the like. The vehicle 10 may include one or more axle assemblies 20 and a brake system 22.

In some configurations, an axle assembly 20 is configured to support one or more wheels 30. For example, the wheel 30 may be fastened to a wheel hub 32 that may be rotatably disposed on the axle assembly 20. A tire 34 is disposed on the wheel 30 and is rotatable with the wheel 30. The axle assembly 20 may also support a brake assembly of the brake system 22. The axle assembly 20 may be provided in a steerable configuration or a non-steerable configuration. In a steerable configuration, the axle assembly 20 may be a steerable structural component, such as a steering knuckle. The axle assembly 20 may be provided in a drive axle configuration or a non-drive axle configuration. In a drive axle configuration, the axle assembly 20 is configured to provide torque from a torque source, such as an electric motor or internal combustion engine, to an associated vehicle wheel to propel the vehicle 10. In a non-drive axle configuration, torque is not provided from a torque source to an associated vehicle wheel to propel the vehicle 10.

The brake system 22 is configured to slow or inhibit rotation of an associated wheel hub 32 and thus slow or inhibit rotation of a wheel 30 that is fastened to the wheel hub 32. In some configurations, the brake system 22 includes a set of friction brakes 40, a fluid power system 42, and a controller 44.

The friction brake 40, which may also be called a foundation brake, is configured to slow rotation of a wheel hub 32. The friction brake 40 may be disposed proximate a wheel hub 32 and may be mounted to the axle assembly 20 such that the friction brake 40 does not rotate with the wheel hub 32.

Multiple friction brakes 40, which may be referred to as a set of friction brakes 40, may be provided with the vehicle 10. In the configuration shown, four friction brakes 40 are illustrated for simplicity, noting that friction brakes 40 may be provided to brake the wheels and wheel hubs depicted near the top of Figure 1.

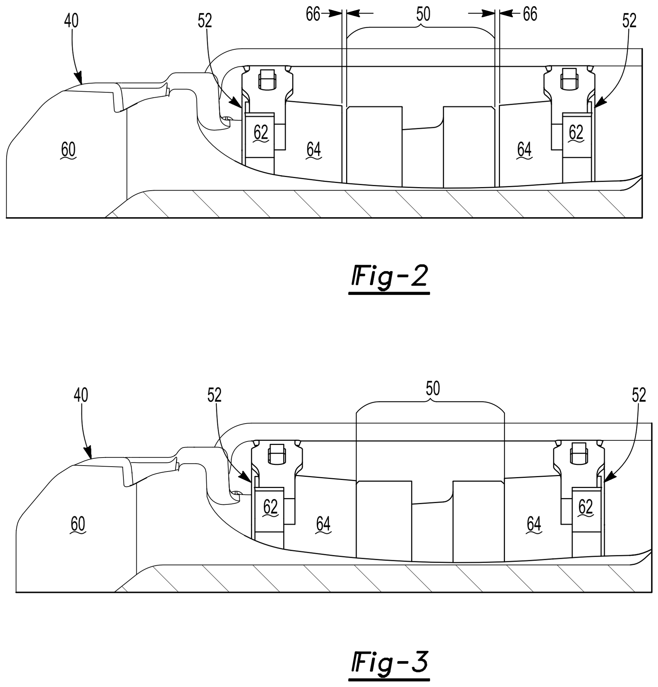

The friction brake 40 may have any suitable configuration. For example, the friction brake 40 may be configured as a disc brake or a drum brake. Referring to Figures 2 and 3, a portion of a friction brake 40 is shown that is configured as a disc brake. In some configurations, the friction brake 40 comprises a brake friction member 50, at least one brake pad assembly 52, and a brake actuator 54.

The brake friction member 50 is rotatable with the wheel hub 32. For instance, the brake friction member 50 may be secured to a wheel hub 32 and may rotate with the wheel hub 32 with respect to a brake pad assembly 52 when braking is not requested. In a disc brake configuration, the brake friction member 50 is configured as a brake rotor, which is also known as a brake disc. In a drum brake configuration, the brake friction member 50 is configured as a brake drum.

The brake pad assembly 52 configured to engage the brake friction member 50 when braking is requested or commanded and exert frictional force against the brake friction member 50 to retard or slow rotation of the wheel hub 32 and an associated wheel 30.

In a disc brake configuration, inboard and outboard brake pad assemblies 52 are disposed on opposite sides of the brake friction member 50 and are configured to engage opposite sides of the brake friction member 50 to retard or slow the rotation of the wheel hub 32 and an associated wheel 30. In such a configuration, the brake pad assemblies 52 may be received in a brake caliper 60 that is moveably disposed on a brake carrier that may be secured to the axle assembly 20. The brake caliper 60 facilitates positioning of the brake pad assemblies 52 with respect to the brake friction member 50. For instance, the brake caliper 60 may be configured to position the brake pad assemblies 52 in engagement with opposite sides the brake friction member 50 to facilitate braking of the brake friction member 50 and facilitate retraction of the brake pad assemblies 52 to disengage the brake friction member 50.

In a drum brake configuration, one or more brake pad assemblies, which may also be called brake shoes, are configured to engage an inner surface of a brake drum that faces toward an axis of rotation of the wheel hub. For instance, a camshaft may be rotated in a first rotational direction to actuate a brake pad assembly into engagement with the inner surface of the brake drum to exert brake torque and the camshaft may be rotated in a second rotational direction to retract the brake pad assembly away from the inner surface of the brake drum.

The brake pad assemblies 52 are configured to engage and exert force on the brake friction member 50 during braking. In some configurations, a brake pad assembly 52 comprises a backplate 62 and friction material 64.

The backplate 62 is a structural member of a brake pad assembly 52. The backplate 62 may be configured as a plate and may be made of any suitable material, such as metal or a metal alloy.

The friction material 64 which may also be called a brake lining, is disposed on a side of the backplate 62 that may face toward the brake friction member 50. The friction material 64 is configured to contact the brake friction member 50 during braking.

The brake pad assembly 52 is moveable between a retracted position and an extended position. Examples of retracted and extended positions are shown in Figures 2 and 3, respectively.

In Figure 2, the brake pad assemblies 52 are shown in a retracted position. The brake pad assembly 52 and its friction material 64 are spaced apart from and do not engage the brake friction member 50 when in the retracted position. The clearance or distance between the friction material 64 and the brake friction member 50 in the retracted position when friction braking is not being applied is referred to as an air gap or running clearance 66.

In Figure 3, the brake pad assemblies 52 are shown in an extended position. The friction material 64 contacts the brake friction member 50 when in the extended position. The air gap is not present in the extended position, thereby resulting in no running clearance or zero running clearance.

Referring to Figure 1, the brake actuator 54 is configured to actuate an associated friction brake 40. In some configurations, the brake actuator 54 is configured as a diaphragm actuator. For instance, the brake actuator 54 may have a housing that defines a chamber. A diaphragm is disposed in the chamber and is sealed against the housing. A push rod or actuator shaft is attached to one side of the diaphragm and extends out of the housing. The opposite side of the diaphragm cooperates with the housing to define a cavity within the chamber. The cavity is configured to receive a fluid. Fluid pressure in the cavity increases when fluid is provided to the cavity. In response, the diaphragm deforms and exerts force on the push rod that causes the push rod to move. The push rod transmits force that actuates the brake pad assemblies 52 in a manner known by those skilled in the art. For instance, the brake actuator may actuate components such as a piston and/or tappet to actuate a brake pad assembly 52 in a disc brake and the brake actuator may rotate a camshaft to actuate brake pad assemblies 52 in a drum brake.

The fluid power system 42 is configured to provide fluid to the friction brakes 40. For instance, the fluid power system 42 may be fluidly connected to the brake actuator 54 and is configured to control fluid flow to or from the brake actuator 54 to actuate a brake pad assembly 52. The fluid power system 42 may utilized any suitable fluid, such as gas or liquid. The fluid power system 42 will primarily be described as having a pneumatic configuration in which the fluid is a gas or gas mixture, such as compressed air. The fluid power system 42 may pressurize or provide the fluid above atmospheric pressure to perform work.

The fluid power system 42 may be disposed on the vehicle 10. In some configurations, the fluid power system 42 comprises a pump 70, storage tank 72, a pressure sensor 74, a set of control valves 76, and a vent valve 78. Components of the fluid power system 42 may be fluidly connected by fluid conductors, such as conduits, tubing, hoses, fittings, manifolds, and the like to distribute pressurized fluid throughout the fluid power system 42.

The pump 70 is configured to provide fluid power. For instance, the pump 70 is configured to pressurize the fluid or increase the pressure of the fluid above atmospheric pressure. The pump 70 may have any suitable configuration. In some configurations, the pump 70 is an air compressor. The pump 70 may be driven or powered in any suitable manner, such as by an engine, electric motor, or electrical power source of the vehicle. The pump 70 may provide pressurized fluid to the storage tank 72.

The storage tank 72, which may also be known as a reservoir, is configured to receive and hold pressurized fluid. For example, the storage tank 72 may be configured to store a volume of pressurized fluid. In some configurations, the storage tank 72 is fluidly connected to a manifold 80, which in turn is fluidly connected to individual friction brakes 40. It is also contemplated that the manifold 80 may be omitted.

Normal operating fluid pressure may comply with applicable government regulations (e.g., Federal Motor Vehicle Safety Standard 121). As an example, a fluid power system 42 configured as an air brake may maintain a fluid pressure or supply pressure of around 100 psi (689.5 kPa) during normal operation. The pump 70 may have a "cut-out" pressure (e.g., a pressure at which the pump 70 is automatically turned off) and a "cut-in" pressure (e.g., a pressure at which the pump 70 is automatically turned on). As an example, the "cut-out" pressure may be between 110-130 psi (758.4-896.3 kPa). The "cut-in" pressure is less than the "cut-out" pressure. In some configurations, the "cut-in" pressure may be about 20 psi (137.9 kPa) lower or less than the cut-in pressure.

The pressure sensor 74 is configured to provide a signal indicative of pressure of the fluid. For instance, the pressure sensor 74 may detect or measure pressure of the fluid. The pressure sensor 74 may be disposed in any suitable location. In some configurations, pressure sensor 74 is provided with the storage tank 72. In some configurations, the pressure sensor 74 is not provided with storage tank 72 but is fluidly connected to the storage tank 72. For instance, the pressure sensor 74 may be disposed upstream from the storage tank 72 or downstream from the storage tank 72, such as at the manifold 80 or in fluid communication with the manifold 80. The pressure sensor 74 may be of any suitable type. For example, the pressure sensor 74 may be a piezoelectric sensor, strain gauge, capacitive sensor, or the like.

The control valve 76 is configured to control flow of the fluid. For instance, the control valve 76 may control fluid pressure, start and stop fluid flow, and control fluid flow direction. In the configuration shown, a set of control valves 76 are provided. Each control valve 76 is fluidly connected to a corresponding friction brake 40. Thus, the friction brakes 40 may be operated independently. The control valve 76 is disposed between the storage tank 72 and a corresponding friction brake 40. In the configuration shown, the control valve 76 is disposed between the manifold 80 and a corresponding brake actuator 54. Pressurized fluid is provided to the brake actuator 54 via the control valve 76 when the control valve 76 is opened. The amount of brake torque provided by a friction brake 40 may be proportional to the fluid pressure. Thus, the control valve 76 may be opened by a greater amount to increase the brake torque.

The vent valve 78 is configured to control fluid flow to reduce fluid pressure in the fluid power system 42. For instance, the vent valve 78 may be opened to vent or exhaust fluid from the fluid power system 42 to the surrounding environment. The vent valve 78 may be disposed in any suitable location. In the configuration shown, the vent valve 78 is fluidly connected to the manifold 80; however, it is contemplated that the vent valve 78 could be disposed at other locations, including but not limited to upstream or downstream from the manifold 80, provided with the storage tank 72, or integrated with a control valve 76.

The controller 44 or control system is configured to monitor and/or control operation of the brake system 22. The controller 44 may include one or more control modules or controllers 44 that may be provided to monitor and control various components. For simplicity, a single controller 44 is shown in Figure 1; however, it is contemplated that multiple control modules or controllers or a distributed control architecture may be provided. The controller 44 may be part of a brake control arrangement that comprises at least the controller 44.

The controller 44 may include various microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, the controller 44 utilizes one or more microprocessors to execute a computer-program that is embodied in a non-transitory computer readable medium that is programmed to perform any number of the functions as disclosed. Further, the controller 44 as provided herein may include a housing and the various number of microprocessors, integrated circuits, and memory devices ((e.g., FLASH, random access memory (RAM), read only memory (ROM), electrically programmable read only memory (EPROM), electrically erasable programmable read only memory (EEPROM)) positioned within the housing). The controller 44 as disclosed also includes hardware-based inputs and outputs for receiving and transmitting data, respectively from and to other hardware-based devices as discussed herein.

The controller 44 may monitor and control operation of the brake system 22. For instance, the controller 44 may monitor and control the fluid power system 42 and the amount of brake torque provided by a friction brake 40. For instance, the controller 44 may monitor, control, or monitor and control operation of the pump 70, control valves 76, and vent valve 78. In addition, the controller 44 may also process input signals or data from various input devices or sensors, such as the pressure sensor 74, a communication device 90, a speed sensor 92, or combinations thereof.

The communication device 90 may be provided to receive an input from the driver or vehicle operator and optionally to provide information to the driver. The communication device 90 may be of any suitable type or types, such as a switch, button, sensor, display, touchscreen, or the like. The communication device 90 may allow a driver to turn the vehicle on and off, set a parking brake, or input data that may not be predetermined or provided by a sensor. The communication device 90 may facilitate communication with the driver, such as by providing a visual notification, audible notification, haptic notification, or combinations thereof. The communication device 90 may allow the driver to enable or disable a method of control.

The speed sensor 92 may provide a signal indicative of speed of the vehicle 10. For instance, the speed sensor 92 may be configured to measure or detect speed of a component that rotates when the vehicle 10 is in motion, such as the wheel hub 32, an axle shaft, transmission component, or the like to directly or indirectly detect vehicle motion.

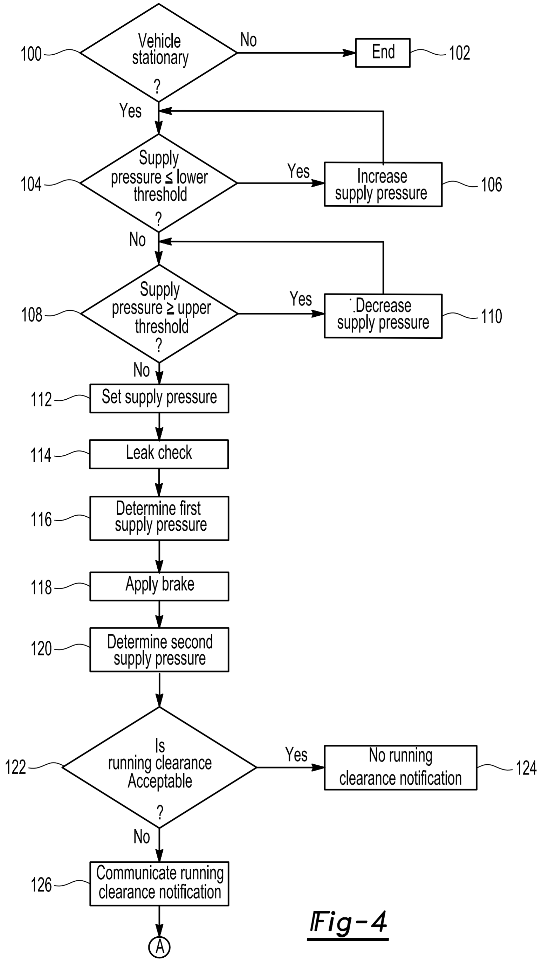

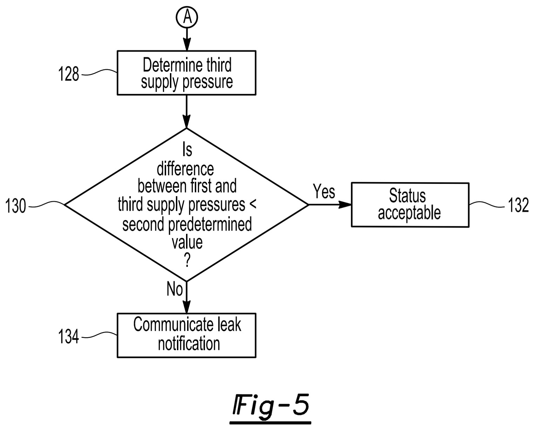

Referring to Figures 4 and 5, flowcharts illustrating a method of controlling the brake system 22 are shown. As will be appreciated by one of ordinary skill in the art, the flowchart may represent control logic that may be implemented or affected in hardware, software, or a combination of hardware and software. For example, the various functions may be affected by a programmed microprocessor. The control logic may be implemented using any of a number of known programming and processing techniques or strategies and is not limited to the order or sequence illustrated. For instance, interrupt or event-driven processing may be employed in real-time control applications rather than a purely sequential strategy as illustrated. Likewise, parallel processing, multitasking, or multi-threaded systems and methods may be used.

Control logic may be independent of the particular programming language, operating system, processor, or circuitry used to develop and/or implement the control logic illustrated. Likewise, depending upon the particular programming language and processing strategy, various functions may be performed in the sequence illustrated, at substantially the same time, or in a different sequence while accomplishing the method of control. The illustrated functions may be modified, or in some cases omitted, without departing from the scope of the present invention. In at least one embodiment, a method may be executed by the controller 44 and may be implemented as a closed loop control system.

As an overview, the method selectively actuates individual friction brakes to indirectly determine whether the running clearance is within acceptable limits, determine whether the fluid power system has a slow leak, or both. When new unworn brake pad assemblies are installed on a friction brake, the position of the brake pad assemblies is set so there is a running clearance between the friction material and the friction member in the retracted position. The friction material wears over time due to repeated brake applications. Ideally, a wear adjuster mechanism or slack adjuster compensates for friction material wear and keeps the running clearance substantially constant. As a result, the stroke of the brake actuator and volume of air used to actuate the brake actuator and move the brake pads from a retracted position to an extended position should remain substantially constant for a given brake command or level of brake torque provided when the wear adjuster mechanism or slack adjuster is functioning properly. Directly measuring brake stroke or running clearance requires an additional sensor, mounting hardware, wiring, and space to package these components, as well as additional cost. Similarly, measuring air flow with a flow meter requires a flow meter, mounting hardware, wiring, and space to package these components, as well as additional cost.

The present invention employs a pressure sensor of the fluid power system to indirectly assess the running clearance without the need for an additional sensor. Friction brakes may be applied or actuated individually. The pressure drop is indicative of the running clearance. The pressure drop for a given brake command or level of brake torque applied is expected to be generally constant for a particular friction brake when the running clearance is substantially constant. A pressure drop that is larger than expected is indicative of a running clearance that is larger than expected or desired in which the brake pad assembly needs to travel a greater distance to engage the friction member.

The method is described below in the context of a friction brake 40 initially being in a retracted position. Method steps may be executed to evaluate individual friction brakes 40 sequentially or in series. It is contemplated that all or some of operation blocks 100-110 may be optional.

At operation block 100, a determination is made as to whether the vehicle 10 is stationary. For instance, the controller 44 may determine if the vehicle 10 is stationary based on one or more inputs, such as a signal from the speed sensor 92 that is indicative of a vehicle speed of 0 mph. As another example, the vehicle 10 may be presumed to be stationary when the vehicle 10 is off or has not been started (e.g., a "key off" condition), when a parking brake is applied, or combinations thereof. Determining whether the vehicle 10 is stationary allows the running clearance to be checked when the vehicle 10 is not being driven or as a precheck during vehicle startup. It is contemplated that the method may be executed when the vehicle is being driven but is stationary and the driver is not requesting brake torque, thereby avoiding undesired or unintended deceleration of the vehicle and reducing friction material wear. If the vehicle is not stationary, then the method or method iteration ends at operation block 102. If the vehicle is stationary, then the method continues at operation block 104.

At operation block 104, a determination is made as to whether the supply pressure of the fluid is less than or equal to a lower threshold. The lower threshold may be a predetermined value that is based on vehicle development testing. As a nonlimiting example, the lower threshold may be a positive pressure that is less than the normal operating fluid pressure (e.g., 100 psi or 689.5 kPa) that may be set by government regulations. Thus, the lower threshold may help ensure that there is sufficient pressure to actuate a brake pad assembly 52 from a retracted position to an extended position. As a nonlimiting example, the lower threshold may be a value less than 50 psi (344.7 kPa) and greater than 5 psi (34.5 kPa), such as 25 psi (172.4 kPa). If the supply pressure is less than or equal to the lower threshold, then the method continues at operation block 106. If the supply pressure is not less than or equal to the lower threshold, then the method continues at operation block 108.

At operation block 106, the supply pressure is increased. The supply pressure may be increased by operating the pump 70. For instance, operating the pump 70 may increase the fluid pressure in the storage tank 72 and hence in the fluid power system 42. The vent valve 78 may be closed when the pump 70 is operated. The pump 70 may be operated to increase the supply pressure so that the supply pressure exceeds the lower threshold, such as by operating the pump 70 for a predetermined period of time or by operating the pump 70 until a signal from the pressure sensor 74 indicates that the supply pressure is greater than the lower threshold. It is contemplated that the supply pressure may be increased by a predetermined amount or to a predetermined range. As an example, if the lower threshold is 25 psi (172.4 kPa), the pump 70 may be operated until the supply pressure is between 50 and 60 psi (344.7-413.7 kPa) or exceeds the lower threshold by a predetermined amount, such as 25 psi.

At operation block 108, the method determines whether the supply pressure is greater than or equal to an upper threshold. The upper threshold is greater than the lower threshold. The upper threshold may be a predetermined value that is based on vehicle development testing. As an example, the upper threshold is a positive pressure value that may be less than the normal operating fluid pressure (e.g., 100 psi or 689.5 kPa) that may be set by government regulations but that is greater than the lower threshold. As an example, the upper threshold may be a value less than 75 psi (517.1 kPa), such as 50 psi (344.7). An upper threshold that is below the normal operating fluid pressure allows a friction brake to be actuated at a lower than normal pressure, which in turn may decrease stress on the friction brake 40 and associated components of the fluid power system 42 during brake application, thereby helping maintain durability of associated components. If the supply pressure is greater than or equal to the upper threshold, then the method continues at operation block 110. If the supply pressure is not greater than or equal to the upper threshold, then the method continues at operation block 112.

At operation block 110, the supply pressure is decreased. The supply pressure may be decreased by not operating the pump 70 and by opening the vent valve 78. Not operating the pump 70 prevents an increase in fluid pressure. Opening the vent valve 78 allows fluid to be released from the fluid power system 42, thereby decreasing the supply pressure. The vent valve 78 may be opened to decrease the supply pressure so that the supply pressure is less than the upper threshold, such as by opening the vent valve 78 for a predetermined period of time or opening the vent valve 78 until a signal from the pressure sensor 74 indicates that the supply pressure is less than the upper threshold. It is also contemplated that the supply pressure may be decreased by a predetermined amount or to a predetermined range. As an example, if the upper threshold is 75 psi (517.1 kPa), the vent valve 78 may be opened until the supply pressure is between 50 and 60 psi (344.7-413.7 kPa).

At operation block 112, the supply pressure is set or established. Setting the supply pressure may include preventing the supply pressure that is provided to a brake actuator 54 from being increased when the friction brake 40 is actuated or applied at operation block 116 (e.g., during actuation from a retracted position to an extended position). The supply pressure may also be maintained or not increased when supply pressure is determined at operation block 114 and may not be increased when the supply pressure is determined at block 116. This allows the pressure drop associated with applying or actuating the friction brake 40 to be isolated and evaluated. Isolating the pressure drop may be accomplished in various ways.

As one example, the pump 70 may be temporarily disabled. Temporarily disabling the pump 70 allows the pressure drop associated with applying or actuating the friction brake 40 to be isolated. For instance, opening a control valve 76 to provide pressurized fluid to a brake actuator 54 that actuates a brake pad assembly 52 from the retracted position to the extended position results in a pressure drop. Operating the pump 70 during brake application or in close temporal proximity to opening the control valve 76 would counteract the pressure decrease and therefore make it difficult to distinguish the pressure drop associated with brake actuation from the pressure increase associated with operation of the pump 70.

As another example, the pump 70 may be fluidly disconnected from the friction brake 40, such as by closing a valve that is located between the pump 70 and the brake actuator 54. For instance, a valve located between the pump 70 and the storage tank 72 may be closed to prevent the supply pressure from being increased by operation of the pump 70 during brake actuation.

The volume of the storage tank 72 may be substantially constant. The pressurized fluid in the storage tank 72 stores energy. The amount of stored energy may be substantially constant once the supply pressure is set. The amount of stored energy may decrease when fluid is released from the storage tank 72 such as discussed in the steps below.

At operation block 114, a leak check may be optionally conducted to evaluate whether there is a fluid leak in the fluid power system 42, the brake actuator 54, or both. As an example, a leak check may be conducted by measuring or detecting the supply pressure at at least two different points in time (e.g., a first time and a second time), determining the change in pressure, if any, from the first time to the second time, and comparing the change in pressure to a predetermined value. For instance, fluid pressure in the storage tank 72 may be determined (e.g., detected, measured, calculated, etc.) after the fluid pressure is set or maintained at operation block 112, fluid may then be provided from the storage tank 72 to the friction brake 40, then the pressure of fluid in the storage tank 72 after providing fluid from the storage tank 72 to the friction brake 40 may be determined. The pressure of fluid in the storage tank 72 before providing fluid from the storage tank 72 to the friction brake 40 may be compared to the pressure of fluid in the storage tank 72 after providing fluid to the friction brake 40.

If the difference in the supply pressures is less than the predetermined value, then the supply pressure is acceptable (e.g., no fluid leak detected, or the amount of fluid leakage is sufficiently low, or is less than the predetermined value) and the method may continue at operation block 116. The predetermined value may be based on development testing. As an example, the predetermined value may in some cases be less than 4 psi (27.6 kPa). A leak check may be conducted in the manner described with respect to operation blocks 126 to 132.

If the difference in the supply pressures is not less than the predetermined value, then there is a fluid leak that renders the supply pressure unacceptable for running clearance evaluation. In response, a fluid leak warning may be communicated or issued, and the method or method iteration may be terminated. It is also contemplated that the leak check may be conducted as part of operation block 116 or before applying the brake at operation block 118.

At operation block 116, the supply pressure is measured or determined. For convenience in reference, the supply pressure prior to brake actuation (i.e., prior to opening the control valve 76 to actuate a brake pad assembly 52 from the retracted position to the extended position) is referred to as a first supply pressure. The first supply pressure may be based on a signal from the pressure sensor 74. It is contemplated that the first supply pressure may also be determined before disabling the pump 70.

At operation block 118, the friction brake 40 is applied or actuated. Brake application moves the brake pad assembly 52 from the retracted position to the extended position. For instance, the controller 44 may command an associated control valve 76 to open and increase fluid pressure at an associated brake actuator 54 and actuate at least one brake pad assembly 52 from the retracted position to the extended position. It is contemplated that the control valve 76 may be opened for a predetermined period of time or minimum period of time to allow the fluid pressure detected by the pressure sensor 74 to stabilize. For instance, the control valve 76 may be opened for a period of time of at least 0.5 seconds, such as between 1 and 5 seconds. Longer times can be employed but increase the method execution time.

At operation block 120, the supply pressure is measured or determined after brake actuation. For convenience in reference, the supply pressure after brake actuation is referred to as a second supply pressure. The second supply pressure may be based on a signal from the pressure sensor 74. For instance, the second supply pressure may be based on a second input signal from the pressure sensor 74. The second input signal may be indicative of supply pressure at a different point in time than the input signal associated with the first supply pressure in operation block 116. The second supply pressure is determined when the pump 70 is disabled. It is contemplated that the brake may be retracted at any point after operation block 120 if an optional leak check is not conducted that is associated with operation blocks 128-134.

At operation block 122, the method determines whether the difference between the first supply pressure and the second supply pressure is acceptable. This can be conducted in various ways.

As a first example, the method may determine whether the difference between the first supply pressure and the second supply pressure is less than a first predetermined value. The first predetermined value may be indicative of an expected pressure drop when the brake pad assembly 52 is actuated over a desired running clearance distance. As a nonlimiting example, a pressure drop of 5 to 25 psi (34.5 to 172.4 kPa) may be expected when a brake pad assembly 52 is actuated from the retracted position to the extended position and the running clearance is 1.0-1.5 mm. A greater pressure drop or pressure drop outside of this range may be indicative of a running clearance that exceeds 1.5 mm. If the difference between the first and second supply pressures is less than the first predetermined value, then the method continues at operation block 124. If the difference between the first and second supply pressures is not less than the first predetermined value, then the method continues at operation block 126.

As another example, the method may determine whether the difference between the first supply pressure and the second supply pressure is within a predetermined range or within predetermined limits. The predetermined range or predetermined limits may vary as the supply pressure changes. The supply pressure decreases as the number of brake application cycles increases since fluid that is used to actuate the brake pad assembly is vented when the brake pad assembly is subsequently retracted and because the supply pressure is not increased due to operation block 112. The inventors of the present invention have discovered that the supply pressure decreases in a non-linear manner and that running clearance may be more accurately assessed at lower system pressures as compared to higher system pressures.

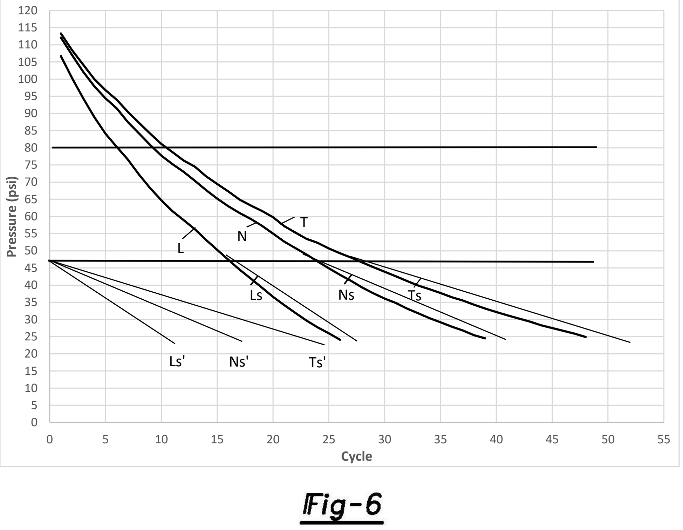

This example is best understood with reference to Figure 6. Figure 6 is a plot associated with supply pressure dropping due to successive brake application and release cycles. Line N represents the nominal or normal pressure expected. The slope of line N decreases as the supply pressure decreases. For instance, the slope of line N is steeper above 80 psi than in the region from 45 psi to 80 psi and the slope of line N is steeper above 45 psi than below 45 psi.

The lines to the left and right of line N graphically represent a predetermined range with respect to line N. Line L represents a "loose" brake condition in which the running clearance between the friction material 64 and the brake friction member 50 is greater than desired. Line T represents a "tight" brake condition in which the running clearance between the friction material 64 and the brake friction member 50 is less that desired. The range or difference between line L and line T increases as the supply pressure decreases (i.e., lines L and T become further apart as the supply pressure decreases). Line T may be closer to line N than line L is disposed to line N. The difference or gap from line N to line L and the difference or gap from line N to line T increases as the supply pressure decreases. As a result, "loose" and "tight brake conditions can be better distinguished or identified with greater confidence at lower supply pressures (e.g., below around 50 to 45 psi or when the supply pressure is half or less than half of the supply pressure provided during normal operation). Moreover, brake application at lower supply pressures is gentler as compared to brake application at higher supply pressures and exerts less stress of the friction brake. Thus, cycling the friction brake at lower supply pressures may be more informative or may provide greater resolution with respect to evaluating running clearance and may do so with less stress on the brake components or structure.

The slopes of lines N, L, and T may vary with respect to each other. Lines Ns, Ls, and Ts approximate the slope of lines N, L, and T between 45 and 25 psi. Lines Ns, Ls, and Ts are replotted as lines Ns', Ls', and Ts' originating at zero cycles to better show the different slopes. Referring to these lines different brake conditions can also be determined with greater resolution as the number of cycles increases. For instance, if the brake is cycled 15 times and the pressure drops from approximately 45 psi to 25 psi then the brake is not "loose" since a "loose" brake would reach this pressure in approximately 11 cycles. Said differently, more fluid is used to actuate a "loose" brake in which the running clearance is larger than desired and as a result the system pressure decreases faster. System pressure that decreases by more than a first amount when a predetermined number of brake cycles are conducted is indicative of a "loose" brake. Similarly, system pressure that decreases by less than a second amount when a predetermined number of brake cycles are conducted is indicative of a "tight" brake. The predetermined number of cycles can be one or more cycles.

At operation block 124, the running clearance is deemed acceptable. The controller 44 may not provide a warning to the driver. It is contemplated that the controller 44 may issue a notification to the driver, such as via the communication device 90 that the running clearance is acceptable, identify the location of the associated friction brake 40, or both.

At operation block 126, the running clearance is deemed unacceptable. The controller 44 may provide a running clearance notification warning to a driver, such as via the communication device 90. The notification may include information about the type of warning, the location of the friction brake 40 associated with the warning, or the like.

Operation block 126 may also be associated with brake faults or warnings associated with attributes other than running clearance. For instance, if a brake pad is missing or not installed, then there may be an abnormally high running clearance since the brake pad assembly will not clamp against the brake friction member when the brake is actuated. Thus, a "loose" brake condition may be indicative of a missing brake pad assembly, a mechanical failure of the friction brake, or the like.

Referring to Figure 5, the method steps or operations shown may be optionally executed after operation block 126.

At operation block 128, the supply pressure is measured or determined. For convenience in reference, the supply pressure after brake actuation and after measuring or determining the second supply pressure is referred to as a third supply pressure. The third supply pressure may be based on a signal from the pressure sensor 74. The third supply pressure is determined when the pump 70 is disabled. The third supply pressure may be determined when the brake pad assembly 52 is in the extended position. In addition, the third supply pressure may be determined a predetermined amount of time after determining the first supply pressure, the second supply pressure, or both. For example, the third supply pressure may be determined or measured seconds or minutes after the first supply pressure is measured or determined, such as between 10 seconds and 5 minutes. The third supply pressure allows pressure changes and potential leaks in the portion of the fluid power system 42 associated with the friction brake 40 being actuated to be detected.

At operation block 130, the method determines whether the difference between the first and third supply pressures is less than a second predetermined value. The second predetermined value may be based on vehicle development testing. The second predetermined value may differ from the first predetermined value. As nonlimiting examples, the second predetermined value may be a pressure drop of less than 10 psi (68.9 kPa), or less than 1 psi (6.9 kPa) depending on the capabilities of the pressure sensor 74. If the difference between the first and third supply pressures is less than the second predetermined value, then the method continues at operation block 132. If the difference between the first and third supply pressures is not less than the second predetermined value, then the method continues at operation block 134.

At operation block 132, the first and third supply pressures are sufficiently close and are not indicative of a slow leak in the portion of the fluid power system 42 that is fluidly connected to the associated friction brake 40. The pressure status is deemed acceptable. A notification may or may not be provided to the driver.

At operation block 134, a leak notification may be communicated. The controller 44 may provide a leak notification warning to a driver. The leak notification warning may be provided via the communication device 90. The notification may include information about the type of warning, the location of the friction brake associated with the warning, or the like.

The present invention may allow the running clearance of friction brakes to be evaluated without additional dedicated sensors, which may help reduce costs and complexity. Friction brakes may be isolated to evaluate running clearance and potential leaks, thereby helping more precisely identify the location of potential issues. The method may be employed with fluid pressures that are lower than normal operating pressures to reduce stress and extend the expected life of associated components. The method may also be employed when the vehicle is stationary, and thus brake pad assemblies are actuated to engage a stationary brake friction member, thereby avoiding unnecessary friction material wear.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A method of controlling a friction brake of a vehicle, comprising:
determining a first supply pressure of a fluid of a fluid power system when a brake pad assembly is in a retracted position;
actuating the brake pad assembly from the retracted position to an extended position with the fluid;
determining a second supply pressure of the fluid when the brake pad assembly is in the extended position; and
determining whether a running clearance is acceptable based on the first supply pressure and the second supply pressure.

2. The method of claim 1, further comprising determining whether the vehicle is stationary before determining the first supply pressure, and wherein actuating the brake pad assembly from the retracted position to the extended position occurs when the vehicle is stationary,
optionally further comprising not actuating the brake pad assembly from the retracted position to the extended position when the vehicle is not stationary.

3. The method of any previous claim, further comprising increasing pressure of the fluid when the first supply pressure does not exceed a lower threshold before actuating the brake pad assembly from the retracted position to the extended position,
optionally wherein increasing pressure of the fluid comprises operating a pump of the fluid power system to increase pressure of the fluid,
optionally to increase pressure of the fluid in a storage tank of the fluid power system.

4. The method of any previous claim, further comprising decreasing pressure of the fluid when the first supply pressure exceeds an upper threshold before actuating the brake pad assembly from the retracted position to the extended position, optionally further comprising temporarily disabling a pump of the fluid power system that is configured to increase pressure of the fluid in the fluid power system before actuating the brake pad assembly from the retracted position to the extended position.

5. The method of any previous claim, further comprising temporarily disabling a pump of the fluid power system that is configured to increase pressure of the fluid in the fluid power system before actuating the brake pad assembly from the retracted position to the extended position.

6. The method of any previous claim, wherein the friction brake is a member of a set of friction brakes and wherein the method further comprises providing the running clearance notification that identifies the member of the set of friction brakes for which a running clearance between the brake pad assembly and a friction member is greater than expected.

7. The method of any previous claim, further comprising conducting a leak check before determining whether the running clearance is acceptable.

8. The method of any previous claim, further comprising determining a third supply pressure of the fluid, and providing a leak notification when a difference between the first supply pressure and the third supply pressure exceeds a second predetermined value.

9. The method of claim 8, wherein determining the third supply pressure occurs when the brake pad assembly is in the extended position.

10. The method of claim 8, wherein determining the third supply pressure occurs a predetermined amount of time after actuating the brake pad assembly to the extended position.

11. The method of any previous claim, further comprising providing a running clearance notification when a difference between the first supply pressure and the second supply pressure exceeds a first predetermined value.

12. A brake system comprising:
a friction brake that comprises:
a brake pad assembly that is moveable between a retracted position and an extended position; and
a brake actuator that is configured to actuate the brake pad assembly;
a fluid power system that is fluidly connectable to the brake actuator, the fluid power system comprising:
a storage tank that receives pressurized fluid;
a pressure sensor that measures pressure of the pressurized fluid; and
a control valve that is fluidly connected to the storage tank and that provides pressurized fluid to the brake actuator when in an open position; and
a controller configured to:
receive a signal from the pressure sensor that is indicative of a first supply pressure of the pressurized fluid when the brake pad assembly is in the retracted position;
open the control valve to provide pressurized fluid to the brake actuator, thereby actuating the brake pad assembly from the retracted position to the extended position;
receive the signal from the pressure sensor that is indicative of a second supply pressure of the pressurized fluid when the brake pad assembly is in the extended position; and
provide a running clearance notification based on the first supply pressure and the second supply pressure,
optionally wherein the fluid power system further comprises a pump that is configured to provide pressurized fluid to the storage tank, wherein the controller temporarily disables the pump before the control valve is opened and when the control valve is open,
optionally wherein the friction brake is a member of a set of friction brakes, the control valve is a member of a set of control valves, and each member of the set of control valves is fluidly connected to a different member of the set of friction brakes.

13. The brake system of claim 12, wherein the fluid power system further comprises a vent valve that is fluidly connected to the storage tank, wherein the controller opens the vent valve to release pressurized fluid from the fluid power system before opening the control valve when the first supply pressure exceeds an upper threshold.

14. A method of controlling a friction brake of a vehicle, comprising:
increasing a pressure of a fluid in a storage tank of a fluid power system when a first supply pressure does not exceed a lower threshold;
decreasing the pressure of the fluid in the storage tank when the first supply pressure exceeds an upper threshold;
maintaining the pressure of the fluid in the storage tank such that the pressure of fluid in the storage tank is not increased;
determining the pressure of the fluid in the storage tank after maintaining pressure; and
conducting a leak check of the fluid power system by providing the fluid from the storage tank to the friction brake, determining the pressure of the fluid in the storage tank after providing the fluid to the friction brake, and comparing the pressure of the fluid in the storage tank after maintaining pressure to the pressure of the fluid in the storage tank after providing fluid to the friction brake.

15. A brake control arrangement comprising:
a controller configured to:
receive an input signal from a pressure sensor, the input signal being indicative of a first supply pressure of a pressurized fluid when a brake pad assembly is in a retracted position;
provide an output signal configured to open a control valve to provide the pressurized fluid to a brake actuator to actuate the brake pad assembly from the retracted position to the extended position;
receive a second input signal from the pressure sensor, the second input signal being indicative of a second supply pressure of the pressurized fluid when the brake pad assembly is in the extended position; and
output a running clearance notification based on the first supply pressure and the second supply pressure.
